# EUROPEAN PATENT APPLICATION

(11) **EP 4 057 400 A1**
(43) Date of publication of application: **14.09.2022**
(21) Application number: 19951983.6
(22) Date of filing: 08.11.2019
(51) Int. Cl.: H01M 8/1097, H01M 8/1286

(54) **FUEL CELL AND METHOD FOR PRODUCING FUEL CELL**

(71) Applicant: Hitachi High-Tech Corporation, Minato-ku Tokyo 105-6409 (JP)
(72) Inventor: SAKUMA Noriyuki, Tokyo 100-8280 (JP); SASAGO Yoshitaka, Tokyo 100-8280 (JP); ANZAI Yumiko, Tokyo 100-8280 (JP); MIGITAKA Sonoko, Tokyo 100-8280 (JP); YOKOYAMA Natsuki, Tokyo 100-8280 (JP); TSUTSUMI Takashi, Tokyo 105-6409 (JP); SUGIMOTO Aritoshi, Tokyo 105-6409 (JP); ARAMAKI Toru, Tokyo 105-6409 (JP)
(74) Representative: Strehl Schübel-Hopf & Partner
(86) International application number: PCT/JP2019/043878
(87) International publication number: WO 2021/090475

(57) **Abstract**

An object of the present invention is to provide a fuel cell that maintains electric generation efficiency of the fuel cell and that has high reliability in which an electrolyte film is not easily damaged. The fuel cell according to the present invention includes a stress adjusting layer covering an opening above a support substrate, and the stress adjusting layer has tensile stress with respect to the support substrate and has a columnar crystal structure in which a grain boundary extends along a direction parallel to a film thickness direction

## Description

### Technical Field

The present invention relates to a fuel cell.

### Background Art

In recent years, a fuel cell is paid attention to as a clean energy source that is capable of high energy conversion and that does not discharge contaminant substances such as carbon dioxide gas or nitrogen oxides. Of the fuel cells, an SOFC (Solid Oxide Fuel Cell) is high in power generation efficiency and can use, as a fuel, easily handleable gas such as hydrogen, methane, and carbon monoxide. Thus, the SOFC is more advantageous than other systems and is expected to be used as a cogeneration system that is excellent in energy saving property and environmental property. The SOFC has such a structure in which a solid electrolyte is sandwiched by a fuel electrode and an air electrode. With the electrolyte as a partition wall, fuel gas such as hydrogen is supplied to the fuel electrode side, and air or oxygen gas is supplied. There are some types of SOFCs. Patent Document 1 discloses a silicon-type SOFC that is capable of operating at a low temperature (600°C). This silicon-type SOFC includes a thin electrolyte to compensate for the lowness of conductivity of the electrolyte and has a single crystal silicon substrate with a through-window formed therein. On the through-window, a fuel electrode, the electrolyte, and an air electrode are laminated.

The silicon-type SOFC disclosed in FIG. 6 of Patent Document 1 has an electrolyte layer on a surface of a substrate in which a recessed groove is formed. In addition, in order to enhance the strength of the electrolyte layer and enlarge the recessed groove, at parts other than an opening of the substrate or at a part of the opening of the substrate, an insulating stress relaxation layer is formed at least on one surface thereof.

### Prior Art Document

### Patent Document

Patent Document 1: JP-2002-329511-A

### Summary of the Invention

### Problems to be Solved by the Invention

The electrolyte layer has compressive stress with respect to the Si substrate. A deflection is generated in a film at the opening at room temperature, and stress is liable to be concentrated particularly at a boundary between the Si substrate and the opening. Since the insulating stress relaxation layer in Patent Document 1 is not formed on the whole opening, the influence of thermal expansion received from the substrate at the time of operation needs to be relaxed by the insulating stress relaxation layer disposed at a part of the opening. Therefore, thermal stress is concentrated at a part where the insulating stress relaxation layer is not disposed, and the deflection of the electrolyte layer is enlarged. Consequently, power loss is caused due to, for example, peeling of the electrode off from the electrolyte layer, resulting in a lowering of power generation efficiency. In addition, since a temperature of the opening is further raised due to a power generation reaction, the deflection of the electrolyte layer is further enlarged with a lapse of operation time, and there is a risk that the electrolyte layer may be damaged.

The present invention has been made in view of the abovementioned problems. It is an object of the present invention to provide a fuel cell of high reliability in which an electrolyte film is not easily damaged while power generation efficiency of the fuel cell is maintained.

### Means for Solving the Problems

A fuel cell according to the present invention has a stress adjusting layer covering an opening above a support substrate, in which the stress adjusting layer has tensile stress with respect to the support substrate and has a columnar crystal structure in which a grain boundary extends along a direction parallel to a film thickness direction.

### Advantages of the Invention

According to the present invention, it is possible to provide a fuel cell of high reliability in which an electrolyte film is not easily damaged while power generation efficiency of the fuel cell is maintained. Other objects and novel characteristics will become apparent from the following description and the attached drawings.

### Brief Description of the Drawings

FIG. 1 is a plan view of a fuel cell 1 according to a first embodiment.
FIG. 2 is a sectional view taken along a line A-A of FIG. 1.
FIG. 3 is a sectional view of a major part of the fuel cell 1 in a manufacturing step, the sectional view being taken along the line A-A of FIG. 1.
FIG. 4 depicts a manufacturing step of the fuel cell 1.
FIG. 5 depicts a manufacturing step of the fuel cell 1.
FIG. 6 is a sectional TEM diagram of the fuel cell 1.
FIG. 7 is a diagram depicting the relation between hydrogen gas permeability and a heating temperature of a stress adjusting layer.
FIG. 8 is a diagram depicting the relation between oxygen gas permeability and a heating temperature of the stress adjusting layer.
FIG. 9 is a plan view of a fuel cell 1 according to a second embodiment.
FIG. 10 is a sectional view taken along a line B-B of FIG. 9.
FIG. 11 is a plan view of a fuel cell 1 according to a third embodiment.
FIG. 12 is a sectional view taken along a line C-C of FIG. 11.
FIG. 13 is a sectional view of a fuel cell 1 according to a fourth embodiment.
FIG. 14 is a sectional view of a fuel cell 1 according to a fifth embodiment.
FIG. 15 is a side sectional view for illustrating the configuration of a fuel cell system according to a six embodiment.

### Modes for Carrying Out the Invention

### <First embodiment>

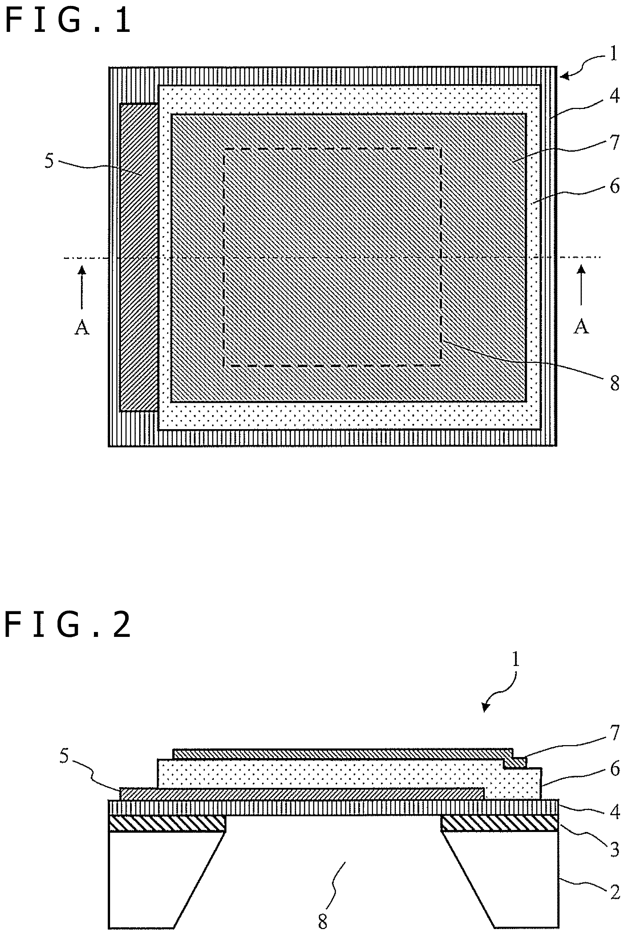

FIG. 1 is a plan view of a fuel cell 1 according to a first embodiment of the present invention. As depicted in FIG. 1, the fuel cell 1 has a semiconductor substrate 2 that is formed of single crystal silicon (Si) and an insulating film 3 and a stress adjusting layer 4 that are sequentially formed on the semiconductor substrate 2. An upper surface of the stress adjusting layer 4 is covered by a first electrode 5 and is also covered by an electrolyte film 6 such that a part of the first electrode 5 is exposed. A second electrode 7 is formed inside the first electrode 5 and the electrolyte film 6. The semiconductor substrate 2 and the insulating film 3 are provided with an opening 8, and the stress adjusting layer 4 is formed such as to cover at least the opening 8 and to cover the insulating film 3 as well. The first electrode 5 and the second electrode 7 which are exposed serve as output terminals and are individually connected with the exterior to supply electric power generated by the fuel cell 1.

FIG. 2 is a sectional view taken along a line A-A of FIG. 1. As depicted in FIG. 2, the semiconductor substrate 2 and the insulating film 3 have the opening 8 whose inner portion is removed, and the stress adjusting layer 4 is exposed in the opening 8. On the stress adjusting layer 4, the first electrode 5 is formed such as to cover the opening 8. While the area of the first electrode 5 is smaller than the area of the stress adjusting layer 4 in FIG. 2, the stress adjusting layer 4 is only required to cover the opening 8 and may have a smaller area than that of the first electrode 5. Though the length of one side of the opening 8 is not limited to a particular length, it is approximately 50 to 300 µm.

The electrolyte film 6 is formed on the most part of the first electrode 5, and the second electrode 7 is further formed on the electrolyte film 6 such as to cover at least the opening 8. While the area of the second electrode 7 is smaller than the area of the electrolyte film 6 in FIG. 2, the second electrode 7 may have a portion larger than the electrolyte film 6 insofar as the first electrode 5 and the second electrode 7 do not make contact with each other.

In such a laminate film in which only the first electrode 5, the electrolyte film 6, and the second electrode 7 are laminated on the opening 8 and the stress adjusting layer 4 is absent as described above, the film thickness of the electrolyte film 6 having compressive stress with respect to the Si substrate is large, and therefore, a deflection is often generated at room temperature. On the other hand, in the first embodiment in which the stress adjusting layer 4 having tensile stress is laminated, stress in the opening 8 can be adjusted, and the deflection of the film can be eliminated.

The crystal structure of the stress adjusting layer 4 is a columnar crystal having a grain boundary that is parallel to a direction (longitudinal direction in FIG. 2) from an opening surface toward the first electrode 5. Thus, even if the stress adjusting layer 4 does not have pores unlike a porous film, fuel gas or air can pass through the stress adjusting layer 4 as long as the film thickness of the stress adjusting layer 4 is within a predetermined range, and electric power can be generated without hindering the supply of fuel gas or air.

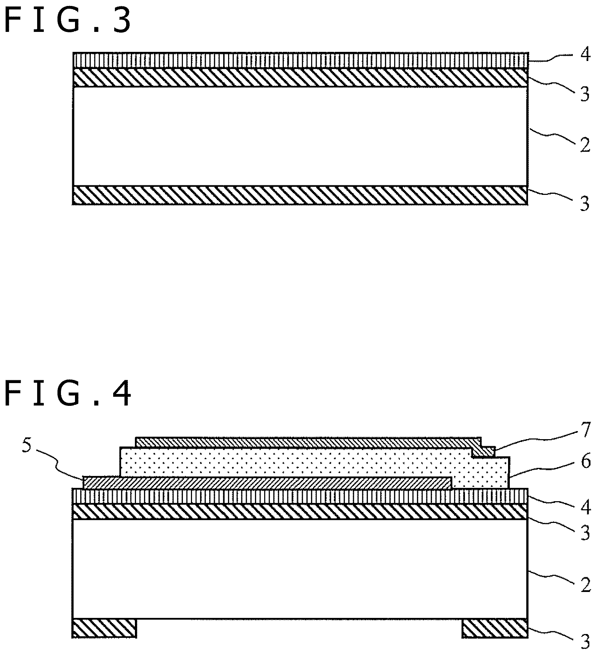

FIG. 3 is a sectional view of a major part of the fuel cell 1 in a manufacturing step, which is taken along the line A-A of FIG. 1. First, as depicted in FIG. 3, the semiconductor substrate 2 formed of single crystal Si in a Si<100> crystal orientation is prepared, and the insulating film 3 is formed thereon. The semiconductor substrate 2 has a thickness of equal to or more than 400 µm. As the insulating film 3, for example, a silicon nitride film having tensile stress is formed in a thickness of approximately 200 nm by a CVD (Chemical Vapor Deposition) method. In the case of the CVD method, a silicon nitride film of the same film thickness is also formed on a back surface of the semiconductor substrate 2. Next, as the stress adjusting layer 4, an aluminum nitride film is formed in a thickness of, for example, 50 nm by a sputtering method or the like. Residual stress in the case where the aluminum nitride film is formed at a substrate temperature of 100°C is a tensile stress of approximately 400 MPa. However, when heat treatment at 1,000°C is conducted in nitrogen, for example, the tensile stress is increased to approximately 900 MPa, so that the stress can be adjusted even in a thin film. In some cases, patterning is conducted by use of a photolithography technique, and the stress adjusting layer 4 is removed except a portion thereof corresponding to the opening 8. Thus, warpage of the semiconductor substrate 2 is adjusted, thereby dissolving defects in the case of assembling components into a module.

FIG. 4 depicts the next manufacturing step of the fuel cell 1. As depicted in FIG. 4, a metallic film such as a platinum film (Pt) is formed in a thickness of, for example, 50 nm by a sputtering method, patterning is conducted by use of a photolithography method such as to securely cover at least the opening 8, and the first electrode 5 is formed by a dry etching method using Ar (argon) gas. In this instance, in order to enhance adhesion between the Pt film and the stress adjusting layer 4, sputter etching using Ar gas, oxygen plasma, or an ozone treatment is conducted to modify the surface prior to formation of the Pt film. Thus, the adhesion is enhanced. Next, at least on a negative resist pattern by which a part of the first electrode 5 is covered, for example, a YSZ film (yttrium-containing zirconium oxide film) is formed as the electrolyte film 6 in a thickness of, for example, 200 nm by a sputtering method. The proportion of yttrium in the electrolyte film 6 is, for example, equal to or more than 3% but equal to or less than 8%. Next, for example, a Pt film is formed in a thickness of approximately 10 to 50 nm by a sputtering method, patterning is conducted by use of a photolithography method, and the second electrode 7 is formed by dry etching using Ar gas. Subsequently, a photolithography technique and an insulating film etching technique are applied to the insulating film 3 formed on the back surface of the semiconductor substrate 2, to expose the back surface of the semiconductor substrate 2.

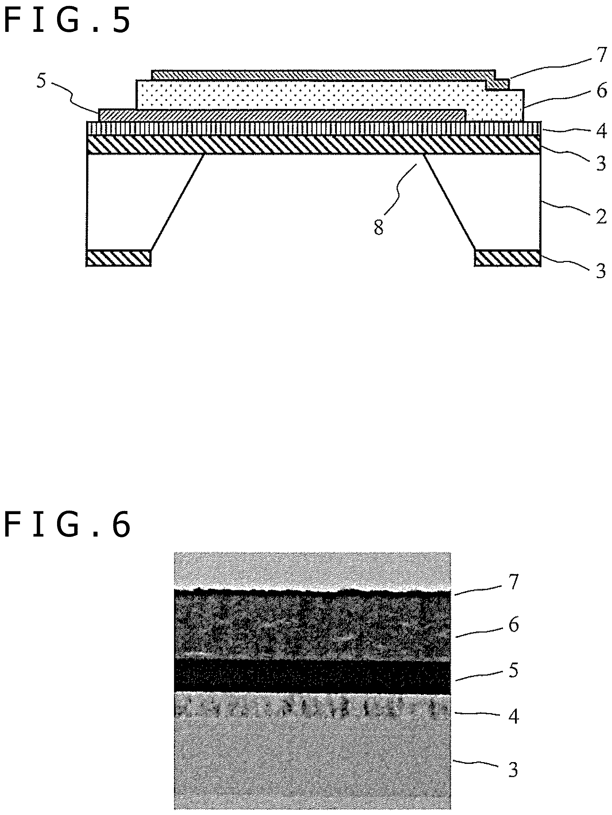

FIG. 5 depicts the next manufacturing step of the fuel cell 1. As depicted in FIG. 5, by using, as a mask, the insulating film 3 on the back surface of the semiconductor substrate 2 having undergone patterning, an Si film of the semiconductor substrate 2 is removed by wet etching using a KOH (potassium hydroxide) solution or a TMAH (tetramethylamide) solution or by dry etching using fluorine-containing gas as a main component, to form the opening 8. Since the insulating film 3 has a sufficient etching selection ratio with respect to the semiconductor substrate 2, it remains as an etching stopper even after the etching is performed on the semiconductor substrate 2. Next, by hot phosphoric acid wet etching or dry etching, the insulating films 3 in the opening 8 and on the back surface are removed, to form the fuel cell 1 as depicted in FIG. 2. In this instance, since the stress adjusting layer 4 has a sufficient etching selection ratio with respect to the insulating film 3, it does not have an adverse effect on the first electrode 5, the electrolyte film 6, and the second electrode 7 that are formed at the opening 8, and a membrane of a favorable laminate film is formed. When wet etching is performed, such a jig that prevents the surface from being submerged is used.

FIG. 6 is a sectional TEM diagram of the fuel cell 1. FIG. 6 illustrates a grain boundary parallel to the longitudinal direction in the stress adjusting layer 4 disposed on the insulating film 3 which is a lowermost layer. The size of the grains is equal to or less than approximately 20 nm in an in-plane direction. When it comes to permeability of gas, as the grains are smaller, there are more grain boundaries, and hydrogen or oxygen is transmitted more easily. While the electrolyte film 6 is also often a columnar crystal, in order to increase the amount of gas to be supplied, it is desirable that a grain diameter in the in-plane direction of the stress adjusting layer 4 is smaller than a grain diameter in the in-plane direction of the electrolyte film 6.

The stress adjusting layer 4 is only required to have tensile stress with respect to the semiconductor substrate 2 and to be a columnar crystal. For example, the stress adjusting layer 4 may be a compound material including a conductive metal such as a titanium nitride film (TiN), a tungsten nitride film (WN), a molybdenum nitride film (MoN), a hafnium nitride film (HfN), or a tantalum nitride (TaN). While the film stress of titanium nitride may be compressive stress in some cases when the film is formed by sputtering, it has been confirmed that the stress can be made to be tensile stress by performing a heat treatment. When the stress adjusting layer 4 has conductivity, it is preferable that it is the same pattern as the first electrode 5 in contact therewith or the like.

It is sufficient that the first electrode 5 and the second electrode 7 each have a film that has a number of grain boundaries (preferably, the grain boundaries are extended to a surface where the electrolyte film 6 makes contact with a fuel (H₂) or air (O₂) supplied to the fuel cell 1, and crystal grains are small) and that has a melting point (for example, equal to or more than 900°C) higher than the use temperature. Examples of the film include a silver film (Ag), a nickel film (Ni), a chromium film (Cr), a palladium film (Pd), a ruthenium film (Ru), and a rhodium film (Rh), in addition to a Pt film. A film of a mixture of the abovementioned materials may be adopted. In addition, a mixed film with the electrolyte film may be adopted, and it is sufficient to have conductivity.

The insulating film 3 is not limited to a single layer of a silicon nitride film and may be a laminate film of a silicon nitride film and a silicon oxide film. It is noted that it is desirable that the insulating film 3 has tensile stress with respect to the semiconductor substrate 2.

Permeability of hydrogen gas and oxygen gas through the stress adjusting layer 4 formed as above will be described below. To enhance the power generation efficiency of the fuel cell 1 using the electrolyte film 6 of the first embodiment, enhancement of ion conductivity of the electrolyte film 6 and a reduction in power loss are required. Though the ion conductivity of the electrolyte film 6 depends on a use environment such as an operation temperature, in order to enhance the ion conductivity of the electrolyte film 6, it is necessary, for example, to supply fuel gas efficiently to an interface between the electrode and the electrolyte film 6 and ionize the fuel gas, to thereby conduct electricity. Therefore, it is required that the stress adjusting layer 4 does not hinder the fuel gas supply. However, to adjust the compressive stress of the electrolyte film 6 and make it tensile stress, a certain degree of film thickness and denseness are required. It is noted, however, that there is a trade-off relation in which, as the film thickness is greater, the supply amount of the fuel gas is reduced, and power loss becomes larger.

Next, results of degassing analysis in the case where gas containing hydrogen and oxygen is supplied and where the stress adjusting layer is heated while the film thickness thereof is changed will be described. In the degassing analysis, three types of specimens, that is, a specimen A, a specimen B, and a specimen C, are compared with each other. A silicon oxide film formed on a Si substrate by a low-temperature CVD is used as the specimen A, which is used as a reference. An aluminum nitride film formed in a thickness of 50 nm as a stress adjusting layer on the specimen A is used as the specimen B. An aluminum nitride film formed in a thickness of 100 nm on the specimen A is used as the specimen C. It is noted that the silicon oxide film formed at a low temperature is highly hygroscopic and is apt to release gas such as hydrogen and oxygen when heated.

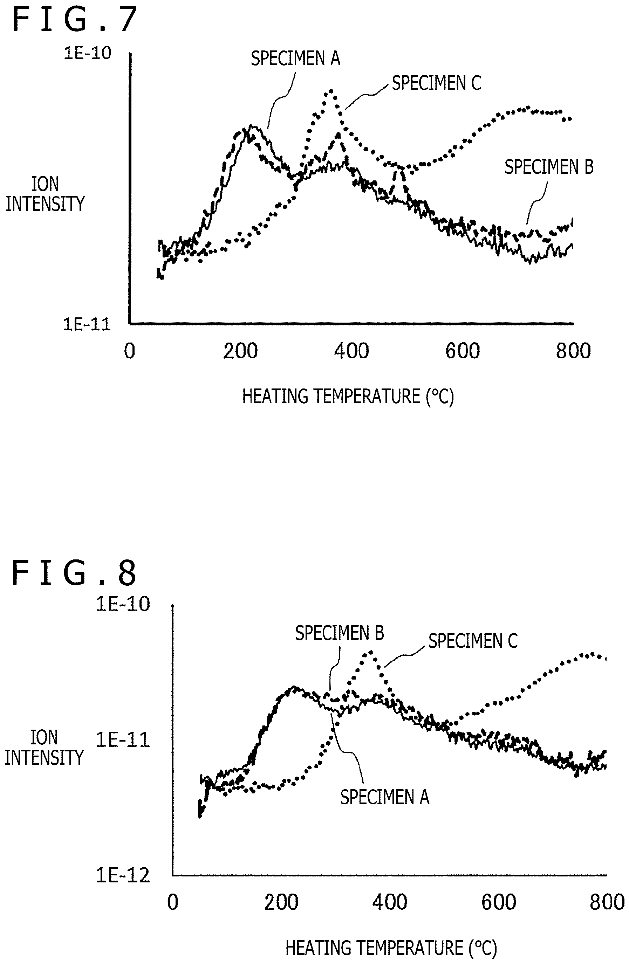

FIG. 7 is a diagram depicting the relation between hydrogen gas permeability and a heating temperature of the stress adjusting layer. In this diagram, the axis of ordinates represents ion intensity indicative of the degassing amount, whereas the axis of abscissas represents a heating temperature. In this diagram, comparison of hydrogen gas permeability is made according to the magnitude of ion intensity, with the specimen A as a reference.

The specimen A (solid line) used as a reference has a peak at a heating temperature of 200°C, and tends to be lowered in degassing amount even when the temperature is raised after the peak. It is noted that, in the case where a film that is apt to absorb a water component is subjected to degassing analysis similarly, it has been confirmed that the film has such a tendency that the water component in the film is evaporated at approximately 200°C and has a peak of degassing. Next, the specimen B (broken line) in which the stress adjusting layer is 50 nm in thickness shows a peak of degassing at 200°C as in the specimen A, and, though some small peaks are observed at higher temperatures, almost the same tendency as the specimen A is shown. The specimen C (dotted line) in which the stress adjusting layer is 100 nm in thickness rarely shows degassing at 200°C, has a peak at approximately 350°C, and has a tendency that the degassing amount is again increased at a high temperature of equal to or more than 650°C. According to these results, in a thin film in which the film thickness of the stress adjusting layer is equal to or less than 50 nm, similarly to a state in which only the silicon oxide film is used, the stress adjusting layer allows gas to pass therethrough and releases the gas when heated. In the case where the operation is intended to be performed at a temperature of equal to or less than 600°C from the viewpoint of system cost reduction, if the film thickness of the stress adjusting layer is equal to or less than 100 nm, a lowering in power generation efficiency can be restrained.

FIG. 8 is a diagram depicting the relation between oxygen gas permeability of the stress adjusting layer and a heating temperature. In this diagram, the axis of ordinates represents ion intensity indicative of the degassing amount, whereas the axis of abscissas represents a heating temperature. The specimen A (solid line) used as a reference has a peak of degassing at approximately 200°C as in the hydrogen gas, and there is a tendency that the degassing amount gradually decreases at higher temperatures. The specimen B (broken line) in which the stress adjusting layer is 50 nm in thickness has a peak at approximately 200°C, and the degassing amount gradually decreases at higher temperatures as in the specimen A. The specimen C (dotted line) in which the stress adjusting layer is 100 nm in thickness has a peak at approximately 350°C, and the degassing amount tends to decrease after the peak but increase again at a temperature of equal to or more than 500°C and keep increasing with temperature. Therefore, even in the case where oxygen is larger in molecular weight than that of hydrogen, the stress adjusting layer that has a thickness of equal to or less than 50 nm has the same tendency as a state in which only a silicon oxide film is used. In addition, the stress adjusting layer that has a thickness of equal to or less than 100 nm can secure oxygen gas permeation at the time of operation at a temperature of equal to or less than 600°C, and a lowering in power generation efficiency can be restrained.

As described above, even in the case of either fuel gas or air, when the stress adjusting layer that has a thickness of equal to or less than 100 nm, particularly equal to or less than 50 nm, is provided on the opening 8 side, gas permeability contributing power generation is not damaged, the influence of thermal stress at the operation temperature can be mitigated, and a membrane structure of a laminate film that maintains a high power generation efficiency and that is excellent in heat resistance can be obtained. However, if the film thickness of the stress adjusting layer 4 is less than 1 nm, it is difficult to uniformly laminate the stress adjusting layer 4, and it is impossible to fulfill the role as a stress adjusting layer. Therefore, it is desirable that the stress adjusting layer 4 has a film thickness of equal to or more than 1 nm.

### <Second embodiment>

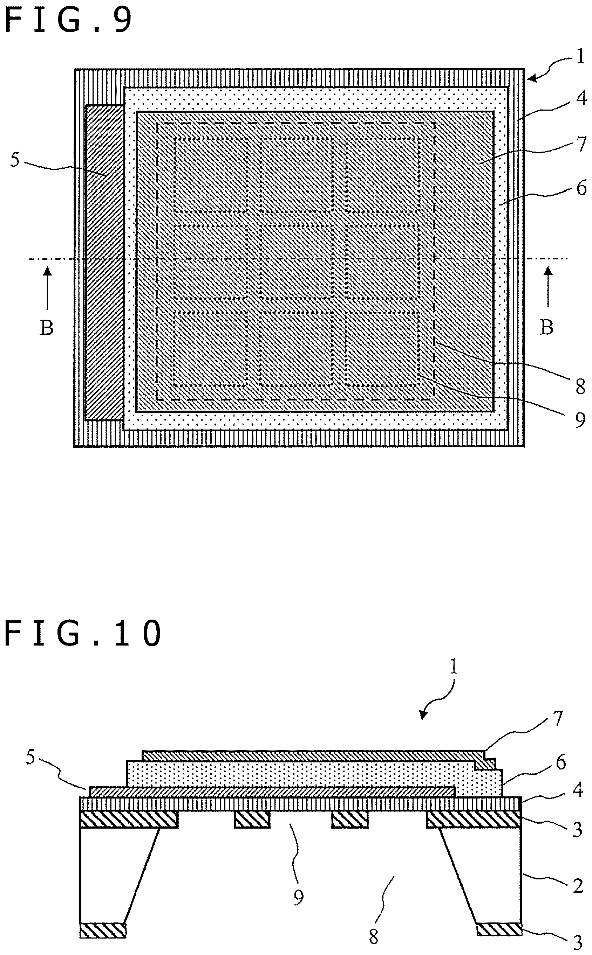

FIG. 9 is a plan view of a fuel cell 1 according to a second embodiment of the present invention. The fuel cell 1 according to the second embodiment has a plurality of small-area second openings 9 that are partitioned by the insulating film 3 and that are arranged on the inner side than the opening 8 of the semiconductor substrate 2. In other words, the insulating film 3 partitions the opening 8 into a plurality of compartments. According to this structure, influence of thermal expansion of the semiconductor substrate 2 due to the temperature at the time of operation can be further mitigated by the insulating film 3, and an increase in area of the opening 8 can be contrived. Thus, heat resistance can be enhanced, and power generation output can be enhanced.

As depicted in FIG. 9, the fuel cell 1 according to the present embodiment is almost the same as the fuel cell 1 according to the first embodiment (the openings 8 and 9 are hidden behind the electrode material) when viewed from the upper side. Specifically, a part of the first electrode 5 is exposed on the stress adjusting layer 4, the electrolyte film 6 is formed on the first electrode 5, and the second electrode 7 smaller in area than that of the electrolyte film 6 is further formed on the electrolyte film 6. However, as viewed from the back side, the plurality of second openings 9 partitioned by the insulating film 3 are arranged inside the opening 8 from which Si is removed. The length of one side of the second opening 9 is 50 to 300 µm, and the length of one side of the opening 8 from which Si is removed is approximately 1 to 6 mm. An interval between adjacent ones of the second openings 9 is, for example, 50 to 100 µm.

FIG. 10 is a sectional view taken along a line B-B of FIG. 9. In FIG. 10, the fuel cell 1 according to the present embodiment differs from the fuel cell 1 according to the first embodiment in the shape of the insulating film 3. In a manufacturing step, after the insulating film 3 of FIG. 3 is formed, parts of the insulating film 3 where the second openings 9 are formed are removed by dry etching or the like using a photolithography method. Thereafter, a silicon oxide film (sacrificing layer) is formed in a thickness of equal to or more than 300 nm by use of, for example, a CVD method, and the silicon oxide film is flattened by CMP (chemical mechanical polishing) until the insulating film 3 is exposed, to thereby eliminate a step between the insulating film 3 and the silicon oxide film. After the elimination of the step between the insulating film 3 and the silicon oxide film, a step of forming the stress adjusting layer 4 to a step of removing the Si substrate to form the opening 8 are similar to the abovementioned steps. Thereafter, the opening 8 is immersed in a fluorine-containing wet etching liquid to remove the silicon oxide film as the sacrificing layer, thereby obtaining a structure in which the insulating film 3 and the stress adjusting layer 4 are exposed. Since the insulating film 3 and the stress adjusting layer 4 have a sufficient fluorine-containing etching selection ratio with respect to the silicon oxide film, no influence is exerted on the first electrode 5, the electrolyte film 6, and the second electrode 7 that are formed at the opening 8, and a membrane structure of a favorable laminate film is formed.

According to the second embodiment, there is no deflection of the laminate film of the stress adjusting layer 4 in the second openings 9 and a power generation region including the first electrode 5, the electrolyte film 6, and the second electrode 7. Further, since the insulating film 3 has tensile stress, the deflection is not generated. Thus, the fuel cell 1 excellent in heat resistance can be formed.

While the shapes of the second openings 9 and 8 are tetragonal in the second embodiment, the opening may be formed into a polygon shape other than the tetragon shape or a circle shape by dry etching. The size of each of the second openings 9 may not be the same.

### <Third embodiment>

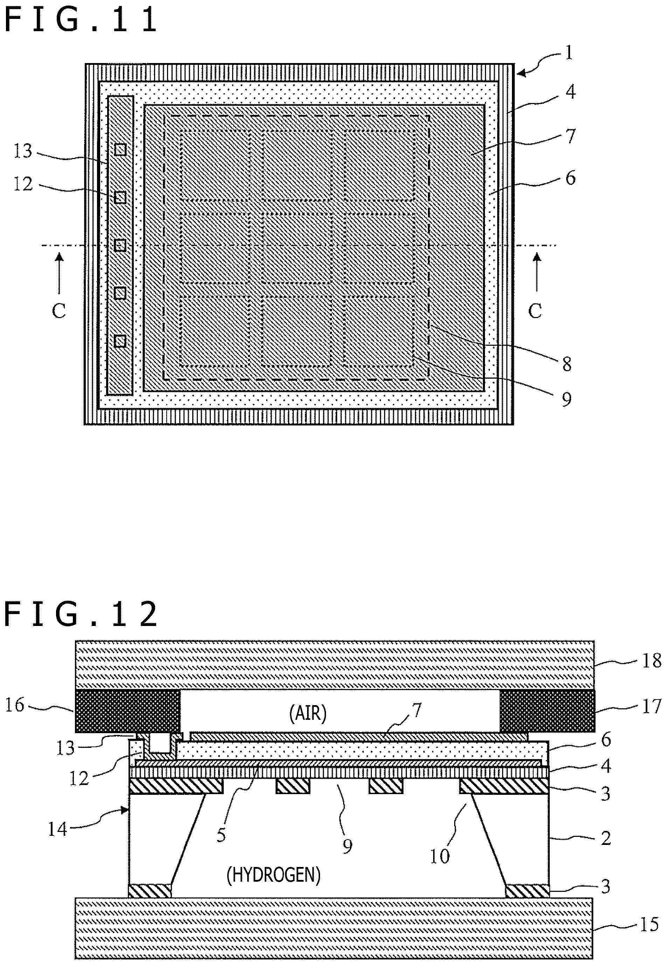

FIG. 11 is a plan view of a fuel cell 1 according to a third embodiment of the present invention. The fuel cell 1 according to the third embodiment includes a third electrode 13 and the second electrode 7 on the electrolyte film 6. The third electrode 13 and the second electrode 7 are used for taking out output power of the fuel cell 1. The third electrode 13 and the second electrode 7 are separately disposed on the left and right sides, for example. These electrodes are almost equal to each other in height from the semiconductor substrate 2. Each of the electrodes is connected to corresponding one of external terminals that are disposed separately on the left and right sides, for example. The third electrode 13 and the second electrode 7 are separated from each other on the electrolyte film 6.

The fuel cell 1 according to the third embodiment differs from the fuel cell 1 according to the second embodiment in that the first electrode 5 is covered with the electrolyte film 6. Apart of the electrolyte film 6 is removed, whereby a contact hole 12 is formed. The first electrode 5 is exposed in the contact hole 12, and the third electrode 13 formed on the same layer as the second electrode 7 is formed such as to fit into the contact hole 12. The third electrode 13 and the second electrode 7 are separated from each other and are not electrically connected to each other.

FIG. 12 is a sectional view taken along a line C-C of FIG. 11. In FIG. 12, in the case where hydrogen gas is to be supplied to the back surface side (the side on which the opening 8 is formed) of the fuel cell 1, in order to form a flow path of gas, a lower base 15 including a ceramic or a metal is provided to obtain a structure that maintains air tightness. The upper side of the fuel cell 1 where the electrode terminals are present is a flow path of air. An upper lid substrate 18 provided with wires 16 and 17 is put on the fuel cell 1 from above. The material of the upper lid substrate 18 is also a ceramic or a metal. The wire 16 is connected to the third electrode 13, and the wire 17 is connected to the second electrode 7. The wires 16 and 17 can be connected to a device consuming the power supplied from the fuel cell 1, through an unillustrated device for controlling power generation, for example. On the upper lid substrate 18, the wire 16 and the wire 17 are separated from each other and are not electrically connected to each other.

The height from the semiconductor substrate 2 to an upper surface of the third electrode 13 and the height from the semiconductor substrate 2 to an upper surface of the second electrode 7 are substantially equal to each other. Accordingly, contact between the third electrode 13 and the wire 16 becomes favorable, and contact between the second electrode 7 and the wire 17 becomes favorable, so that powder generation loss can be reduced. In addition, the heights of these are substantially equal to each other, the air flow path can be hermetically sealed by the upper lid substrate 18. Further, the fuel cell 1 serves as a partition wall to prevent hydrogen gas and air from being mixed together. Moreover, since the output electrodes are present on the side to which air is supplied, the risk of corrosion of the electrode (the first electrode 5 or the second electrode 7) is eliminated, and the risk of ignition of hydrogen gas can be eliminated.

By adhering the fuel cell 1 onto the upper lid substrate 18 and stacking the upper lid substrate 18 thereon, a plurality of fuel cells 1 are stacked, whereby the power generation amount can be enhanced. In this case, on the side of an upper surface (a surface opposite to a surface to which air is supplied) of the upper lid substrate 18, a flow path for supplying hydrogen gas is formed as in the base 15. A seal member for maintaining hermetic property may be interposed in the base 15 (in a gap between the upper lid substrate 18 and the back surface insulating film 3 of the fuel cell 1 in the case where the fuel cells 1 are stacked).

### <Fourth embodiment>

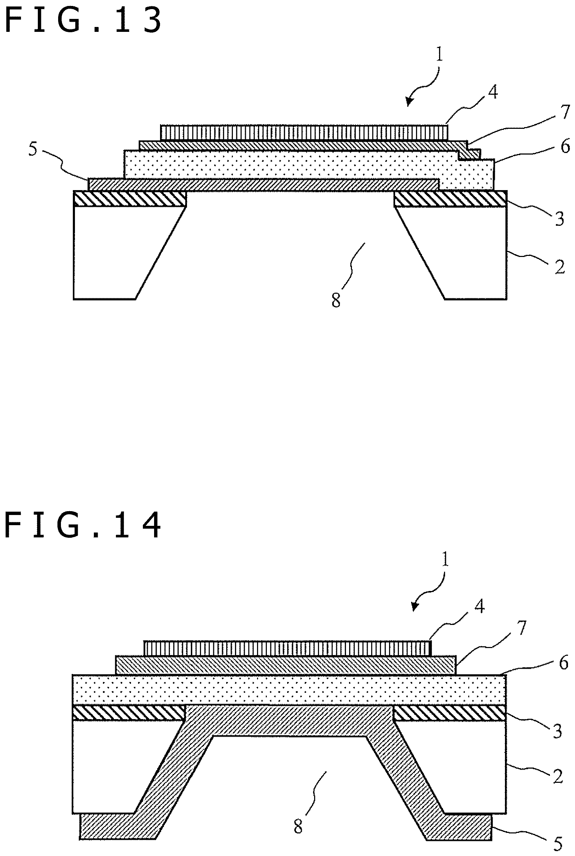

FIG. 13 is a sectional view of a fuel cell 1 according to a fourth embodiment of the present invention. The fuel cell 1 according to the fourth embodiment has the stress adjusting layer 4 disposed on the second electrode 7. As depicted in FIG. 13, the first electrode 5 is formed directly on the insulating film 3 having the opening 8. The electrolyte film 6 and the second electrode 7 on the upper side of the first electrode 5 are the same as those in the first embodiment. Next, the stress adjusting layer 4 is formed such as to cover the opening 8. Thus, stress of the laminate film provided at the opening 8 is adjusted, obtaining a membrane structure in which a deflection is not generated at room temperature. In this structure, for example, fuel gas is supplied directly to the first electrode 5, and, for example, air is supplied to the second electrode 7 through the stress adjusting layer 4. As described above, the stress adjusting layer 4 has favorable permeability of oxygen and has an effect similar to that in the first embodiment. Therefore, a fuel cell that is excellent in heat resistance while maintaining a high power generation efficiency can be provided.

### <Fifth embodiment>

FIG. 14 is a sectional view of a fuel cell 1 according to a fifth embodiment of the present invention. The fuel cell 1 according to the fifth embodiment has the first electrode 5 disposed on the back side of the semiconductor substrate 2. As depicted in FIG. 14, the electrolyte film 6 is formed directly on the insulating film 3 having the opening 8, and the second electrode 7 is formed on the electrolyte film 6. On the second electrode 7, the stress adjusting layer 4 is formed similarly to the fourth embodiment. The first electrode 5 is formed from the back surface side after the opening 8 is formed.

The back surface of the semiconductor substrate 2 is not flat, and the opening 8 having a side wall inclined is formed. When the material of the first electrode 5 is laminated on the semiconductor substrate 2 from the back surface side thereof in this state, the material of the first electrode 5 is liable to be deficient particularly at both ends of a bottom portion of the opening 8 (a surface in contact with the electrolyte film 6). Therefore, the film thickness of the first electrode 5 is desirably thicker than the film thickness of the insulating film 3. If the material of the first electrode 5 is deficient at these parts, a non-conduction part would be generated in the first electrode 5. However, thickening of the first electrode 5 worsens gas permeability, and therefore, it is preferable to use a porous electrode material.

In the fifth embodiment, an effect similar to that of the first embodiment is also obtained, and a fuel cell that is excellent in heat resistance while maintaining a high power generation efficiency can be provided.

### <Six embodiment>

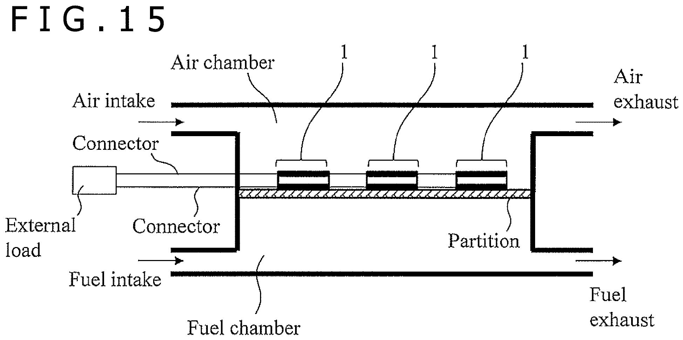

FIG. 15 is a side sectional view for illustrating the configuration of a fuel cell system according to a six embodiment of the present invention. In the present embodiment, the fuel cell 1 is any one of the fuel cells 1 described in the first to fifth embodiments. The fuel cells 1 are disposed in an array form, and an air chamber is formed above the fuel cells 1. Air is introduced into the air chamber through an air intake port and is exhausted through an air exhaust port. A fuel chamber is formed below the fuel cells 1. Fuel gas is introduced into the fuel chamber through a fuel intake port and is exhausted through a fuel exhaust port. The fuel cells 1 are connected to an external load through a connector.

### <Modification of the Present Invention>

The present invention is not limited to the abovementioned embodiments and includes various modifications. For example, the abovementioned embodiments are described in detail for facilitating the understanding of the present invention and are not necessarily limited to the one including all the described configurations. In addition, a part of the configuration of a certain embodiment can be replaced with the configuration of another embodiment, and the configuration of a certain embodiment can be added to the configuration of another embodiment. Besides, in regard of a part of the configuration of each embodiment, deletion or addition of or replacement with another configuration can be performed.

In the above embodiments, the electrolyte film 6 may include a laminate film in which, for example, a plurality of films differing in the proportion of yttrium are laminated. Alternatively, the electrolyte film 6 may include a laminate film in which a cerium oxide film (CeO₂) and a gadolinium-containing cerium oxide film (GDC) are laminated.

In the above embodiments, there has been described that the crystal structure of the stress adjusting layer 4 has the grain boundary which extends along a direction parallel to the film thickness direction. The columnar crystal structure in which the grain boundary extends along a direction parallel to the film thickness means that the crystal grain boundary is continuous from a lower surface to an upper surface of the stress adjusting layer, and is not limited to the one that is perfectly parallel to the film thickness direction.

### Description of Reference Characters

1: Fuel cell
2: Semiconductor substrate
3: Insulating film
4: Stress adjusting layer
5: First electrode
6: Electrolyte film
7: Second electrode
8: Opening
9: Second opening
12: Contact hole
13: Third electrode
15: Base
16: Wire
17: Wire
18: Upper lid substrate

## Claims

1. A fuel cell comprising:
a support substrate having an opening;
a first electrode disposed in a region where the opening is formed;
an electrolyte film disposed on the first electrode;
a second electrode disposed on the electrolyte film; and
a stress adjusting layer that is disposed above the support substrate and that covers the opening,
wherein the stress adjusting layer has tensile stress with respect to the support substrate and has a columnar crystal structure in which a grain boundary extends along a direction parallel to a film thickness direction.

2. The fuel cell according to claim 1,
wherein the stress adjusting layer is formed by use of at least any of aluminum nitride, titanium nitride, tungsten nitride, a molybdenum nitride film, a hafnium nitride film, and tantalum nitride.

3. The fuel cell according to claim 1,
wherein a film thickness of the stress adjusting layer is equal to or more than 1 nm but equal to or less than 100 nm.

4. The fuel cell according to claim 1,
wherein a grain diameter in an in-plane direction of the stress adjusting layer is equal to or less than a grain diameter in an in-plane direction of the electrolyte film.

5. The fuel cell according to claim 1,
wherein the stress adjusting layer is disposed on the support substrate with an insulating film therebetween.

6. The fuel cell according to claim 5,
wherein the insulating film has tensile stress with respect to the support substrate.

7. The fuel cell according to claim 5,
wherein the opening is partitioned into a plurality of compartments by the insulating film.

8. The fuel cell according to claim 1,
wherein the electrolyte film has a contact hole, and
the fuel cell further includes a third electrode that makes contact with the first electrode by fitting into the contact hole.

9. The fuel cell according to claim 8,
wherein a distance from the support substrate to an uppermost surface of the third electrode and a distance from the support substrate to an uppermost surface of the second electrode are set such that, when the fuel cell is covered by a lid member, a space between the second electrode and the lid member is hermetically sealed.

10. The fuel cell according to claim 1,
wherein the stress adjusting layer is disposed in contact with one of opposite surfaces of the first electrode that is not in contact with the electrolyte film.

11. The fuel cell according to claim 1,
wherein the stress adjusting layer is disposed in contact with one of opposite surfaces of the second electrode that is not in contact with the electrolyte film.

12. The fuel cell according to claim 1,
wherein a material of the first electrode and a material of the second electrode are Pt, Ag, Ni, Cr, Pd, Ru, or Rh or a mixed film of these.

13. The fuel cell according to claim 1,
wherein the electrolyte film is a yttrium-containing zirconium oxide film, and
a proportion of yttrium in the electrolyte film is equal to or more than 3% but equal to or less than 8%.

14. The fuel cell according to claim 13,
wherein the electrolyte film is a laminate film in which a plurality of films different in proportion of yttrium are laminated,
or
the electrolyte film is a laminate film in which a cerium oxide film (CeO₂) and a gadolinium-containing cerium oxide film (GDC) are laminated.

15. A fuel cell manufacturing method comprising:
a step of forming a support substrate;
a step of forming a first electrode on the support substrate;
a step of forming an electrolyte film on the first electrode; and
a step of forming a second electrode on the electrolyte film,
wherein the method further includes
a step of forming a stress adjusting layer above the support substrate, and
a step of forming an opening at a position of the support substrate that is covered by the stress adjusting layer, and
the stress adjusting layer has tensile stress with respect to the support substrate and has a columnar crystal structure in which a grain boundary extends along a direction parallel to a film thickness direction.
